# EUROPEAN PATENT SPECIFICATION

(11) **EP 1 106 938 B1**
(45) Date of publication and mention of the grant of the patent: **24.09.2003**
(21) Application number: 00204356.0
(22) Date of filing: 06.12.2000
(51) Int. Cl.: F24J 2/52

(54) **Solar panel assembly**
Solarpaneelanordnung
Ensemble de panneau solaire

(30) Priority: 06.12.1999 NL 1013762
(43) Date of publication of application: 13.06.2001
(73) Proprietor: Brinic B.V., 3439 LD Nieuwegein (NL)
(72) Inventor: Piest, Egbert, 3439 LD Nieuwegein (NL)
(74) Representative: Huygens, Arthur Victor

(56) References cited:
- FR-A- 2 640 031
- NL-C- 1 005 204
- US-A- 4 306 544
- US-A- 4 440 861
- US-A- 4 622 951

## Description

The present invention relates to a solar panel assembly which comprises:
- one or more solar panels,
- means for obtaining and storing solar energy which are functionally linked to said solar panels, said means comprising one or more solar boilers, a circulating pump and an expansion tank, and
- a device for supporting such solar panels,

Such an assembly is well known in the art. Solar panels and/or solar collectors, also collectively referred to hereinafter as solar panels, have been used more and more frequently, in particular on pitched roofs of houses. Usually a frame for supporting such solar panels is applied, consisting of supporting beams which extend in the direction of the pitch. Other components of the solar panel assembly, including one or more solar boilers, a circulating pump and an expansion tank are usually arranged at a suitable location in the house, for example at the attic, and linked with connecting conduits and cables to the solar panel.

Dutch Patent No. 1006490 discloses a frame for solar panels which is to be arranged obliquely, thus avoiding the problem of condensation of the solar panels at the side facing the roof which could cause leakage.

Also constructs of solar panels are known which can be arranged on flat roofs of houses and other buildings. These constructs normally comprise a frame on which one or more solar panels are mounted at an angle of at least 20°, which panels are linked by means of connecting conduits and cables to the other parts of the construct or assembly, as described above, which is usually located inside the house or building. The prior art frames usually are open and are generally made of metal, wood or a resin, and they are made heavier by concrete tiles, or the like. The appearance of such open frames is by no means aesthetic. In addition, the solar panels on an open frame could act as a sail, which makes additional demands on the mounting of the panels and the anchoring of the frame.

Dutch patent specification 1005204 (equivalent to EP-A-0 857 926) discloses a device for supporting solar panels which can be arranged on a flat roof, the device being made of plastic and comprising: a bottom wall, a rear wall which extends upwardly from a rear of the bottom wall, two oppositely arranged side walls which are integrally joined with side edges of the bottom wall and rear wall, wherein the side walls slope from the rear wall to a front edge of the bottom wall. According to the description this plastic device aims to obviate problems which are associated with the mounting and transportation of prior art supporting devices for solar panels made of concrete, often requiring a complete day to arrange only one support on a flat roof. The plastic devices have a weight of about 5 kg, so that the mounting time for mounting these solar panels, especially on flat roofs is considerably reduced. Due to the little weight of these plastic devices they have to be made heavier, which can be realized with blocks of concrete. The other parts for letting this solar panel function and especially for obtaining electricity through the solar panel, are located elsewhere.

It is an object of the present invention to provide a solar panel assembly, which is particularly suitable for being mounted on a flat roof, and which comprises substantially one or more solar panels, means for obtaining and storing solar energy which are functionally linked to said solar panels, and a supporting device, wherein the supporting device, also referred to as "the frame" or "the collector housing", is closed and contains entirely or in part the said further assembly of components which are needed for obtaining and storing solar energy.

Accordingly, the present invention is characterized in that the supporting device comprises:
- a bottom wall,
- a rear wall which extends upwardly from a backside of said bottom wall,
- optionally a front wall which extends upwardly from a front side of said bottom wall,
- two oppositely arranged side walls which are integrally joined with side edges of said bottom wall, said rear wall and, when present, said front wall, said side walls sloping from said rear wall to said front wall or a front edge of said bottom wall,
wherein the supporting device is closed and isolated inwardly;
wherein the supporting device is provided at the upper side with receiving means for receiving a solar panel; and
wherein said means for obtaining and storing solar energy are substantially located within the supporting device.

It is noted that U.S. Patent No. 4,306,544 discloses a solar powered water heater comprising a housing, a water storage tank, reflective coated insulation and a solar panel. The system for heating the water is based on a siphon principle, requiring no electric power nor other electric means for operation. This system is in no way comparable with the solar panel assembly of the present invention.

U.S. Patent No. 4,440,861 discloses a solar apparatus for producing alcohol including a frame portion, a heating portion, a slurry-forming portion, a fermentation portion, a destillation portion, a condensation portion, and a drying portion. Although the various portions of this alcohol-producing solar apparatus seem to be arranged substantially within the frame, this rather complex industrial device can in no way be compared with the relatively simple solar panel assembly according to the present invention. Evidently, this industrial device will not be placed, from a functional point of view, on the roofs of houses or buildings as is the case with the solar panel assembly of the present invention. In addition, the side walls of the frame of the industrial device are open in order that the heat developed within the frame can escape.

French Utility Model No. 2640031 discloses a multi-functional device aiming at storing solar energy, which consists of an isolated housing having at one side a declining double-glass panel, within which the various components are accommodated. According to the description the principle of the device is based on an optimized greenhouse, where the temperature may vary between 40 and 180°C, depending on the amount of sunshine. The present invention is based on a totally different principle and can in no way be compared with an optimized greenhouse.

Preferably, the supporting device is made of metal, more preferably of steel plate, and in particular of galvanized steel plate. In accordance with a preferred embodiment 2 mm Sendzimir® galvanized steel plate is applied, wherein the seams are welded and at the inner side finished with zinc compound. Alternatively, the supporting device can also be made of aluminium, a resin such as polyester, or wood.

The inner side of the supporting device is preferably coated, at least on the rear wall, the side walls and the front wall, with a layer of coating or insulating material. A suitable coating material is, for example, polyurethane foam. The thickness of the coating layer is dependent *inter alia* on the prevailing weather conditions and particular wishes of the customer, but usually is in the range of 30 mm. Other coating materials which are known to a person skilled in the art may also be used. In addition, the solar boiler(s) is (are) preferably provided with a thermostat and a heating device functionally connected thereto, to protect the boiler(s) against low temperature conditions and in particular against frost. In the preferred embodiment now described the built-in solar boiler system is double protected against frost, by isolating the collector housing with polyurethane foam, or the like material, and by placing a heating element in the boiler, which depending on the thermostat adjustment will heat the water in the boiler at a temperature in the collector housing of, for example, 3°C to for example 10°C. In this way there will be no danger that tap water in the boiler will be frozen. The collector circuit usually is filled with a frost-proof, high-boiling fluid, preferably having a freezing point of -30°C or below. A suitable fluid is for example a liquid on the basis of glycol or glycerol, such as Fernox-Anticor-Kiwa®.

For the mounting of the solar panels the supporting device is preferably provided on the upper side with receiving means for receiving a solar panel. More preferably, the device is provided with a frame of composite T-profile. In all embodiments the mounting takes place in a way which is well known to a person skilled in the art.

In order to obtain optimal yields the solar panels are preferably mounted at an angle of 20-45° relative to the horizontal. This means that the side walls to the front wall or a front edge of the bottom wall are preferably declining at an angle of about 20-45° relative to the horizontal.

The supporting device usually is made waterproof and is preferably provided with one or more ventilation cracks which are free from impact of rain.

It is advantageous if the supporting device is provided with a panel for inspection, in order to be able to easily reach the inner bottom side of the solar panel and further equipment which is located within the supporting device, for example in case of maintenance or with calamities. The inspection panel is preferably provided in the rear wall, but it may also be positioned elsewhere, if desired, for example at an higher part of a side wall.

Preferably, the supporting device is at the bottom side provided with a protective sheet, for example a tempex-layered sheet having a thickness of about 2 cm, to prevent mechanical damage of the roofing-material.

Furthermore, it is advantageous to provide the solar panel assembly with lifting hooks or similar means for the same purpose, so that the entire construct can be easily hoisted to the roof, preferably a flat roof, where it is to be placed. The lifting hooks are normally located at or adjacent to the four corners of the supporting device, near the upper side.

The supporting device generally is further provided with an opening for the passage of connecting conduits and/or cables. These connecting conduits usually comprise water conduits to and from the solar boiler, the (electrical) connecting cables may be applied *inter alia* to a boiler, a circulating pump and a safety thermostat together with a heating device. Preferably the opening is arranged at the bottom side of the supporting device, so that an excellent and preferably waterproof sealing with the adjacent surrounding can be obtained, in which the connections of the conduits and cables can be easily realized. The waterproof sealing can be obtained, for example by dropping the supporting device over an aluminium adhering sheet. In a preferred embodiment the opening is circular and has a diameter in the range of 115 mm. By providing such an opening condensation within the supporting device will be avoided.

In many cases the solar panel assembly according to the invention has sufficient weight by its own weight of the supporting device, the solar panels and the further equipment in the supporting device, to be placed without further provisions on the - usually - flat roof, and only the conduits and cables have to be connected. Optionally the supporting device may be made heavier, preferably by adding some form of ballast in the device, for example shingle.

According to a preferred embodiment of the invention the solar panel assembly comprises a sunlight energy system of the Brinic/Solartek® type, in which a sunlight collector and a solar boiler are incorporated. The solar system uses sunlight and, to a lesser extent, solar heat. This energy is converted to heat for the solar boiler. Preferably a boiler is applied having a storage capacity of 80 or 120 litre, but also other formats can be efficiently used. This boiler can be suitably combined with a high-efficiency heating boiler or another after-heating device (for example a heating pump, or an electrical device), resulting in considerable savings of energy costs on hot water.

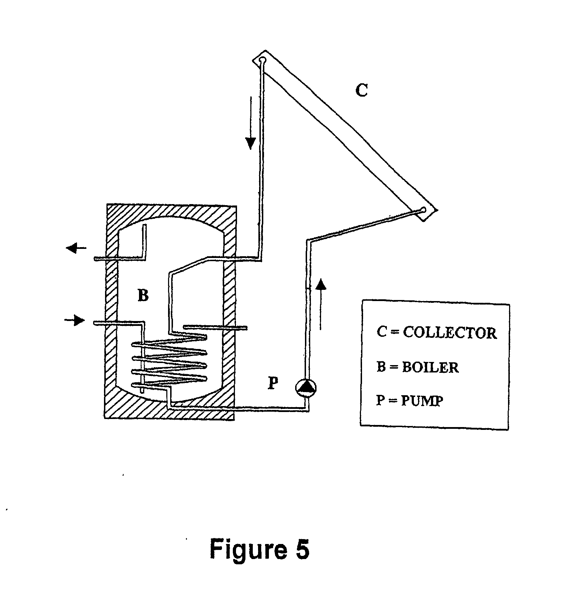

The operation of a solar panel is well known in the art and is based upon the principle, that the solar panel of the solar collector (C) collects sunlight which is converted into heat (see Figure 5). A heat exchanger in the solar boiler (B) causes the transfer of heat to the tap water in the boiler. The heated liquid, which is situated in the collector/exchange part, is pumped around by a circulating pump (P), and takes care of an efficient heat transfer. When hot water is demanded, it runs out of the solar boiler through an after-heating apparatus (combi-boiler) to the drawing point. The after-heating apparatus measures the temperature of the water and heats it, if necessary. In this way there is always sufficient water available.

In order to utilize the collected energy in the best possible way, preferably a control unit is used, preferably of the SLC-2000 type. The control unit takes care, that the pump in the collector circuit will be only in operation, when actually heat is to be transferred. Preferably a boiler-and collector-sensor is used measuring the temperature in the boiler and collector. If the temperature in the collector is 2°C higher than the temperature in the boiler, the pump will start operating. If the difference of the temperature will become smaller than 2°C, the pump will be switched off. Also when temperature of the boiler reaches a certain value, the pump will be switched off. When the temperature of the tap water in the boiler is higher than about 58°C, the after-heater (combi-boiler) will not be switched on. If the tap water in the boiler is under 58°C, the after-heater (combi-boiler) will be switched on. Since the temperature in the solar boiler may rise to 80°C in the summer, the device is preferably secured with a mixing valve. This mixing valve is placed in hot water exit of the tap water of the boiler, where by mixing of cold water the temperature can be lowered to 58 to 60°C.

In a preferred embodiment of the present invention the principle described above is substantially applied.

The advantages of the solar panel assembly according to the invention relative to prior art systems for application on flat roofs are, *inter alia,* saving of space by the built-in device, saving of labour at the mounting since the whole device is prefabricated, and no mechanical damage of the roofing-material.

The present invention will be further described with reference to the following Figures, in which:

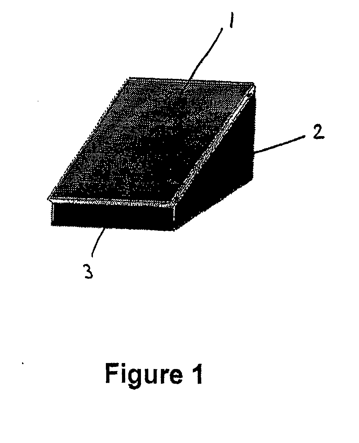

Figure 1 is a solar panel assembly according to the invention;
Figure 2 is an expanded view of the solar panel assembly of Figure 1;
Figure 3 is a diagrammatic side view of a solar panel assembly;

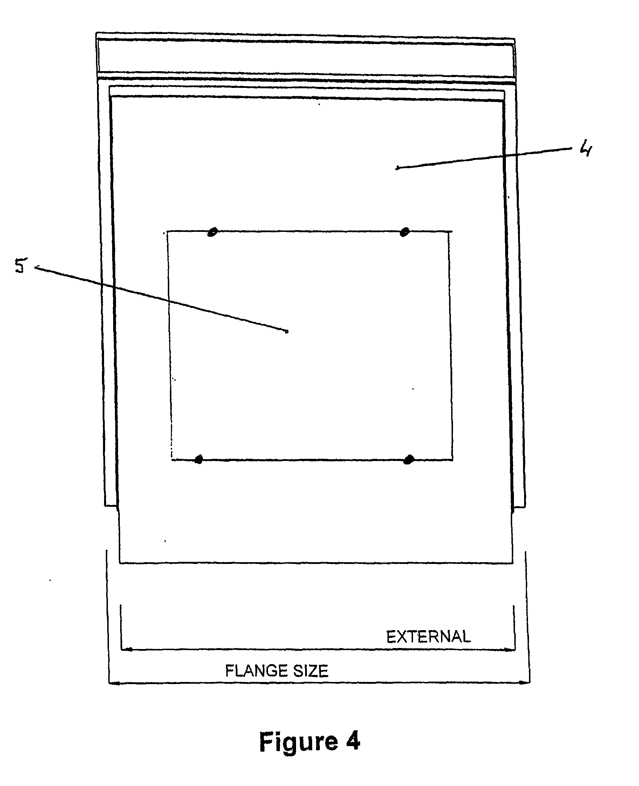

Figure 4 is a perspective rear view of a solar panel assembly;
Figure 5 shows diagrammatically the action of a solar boiler system.

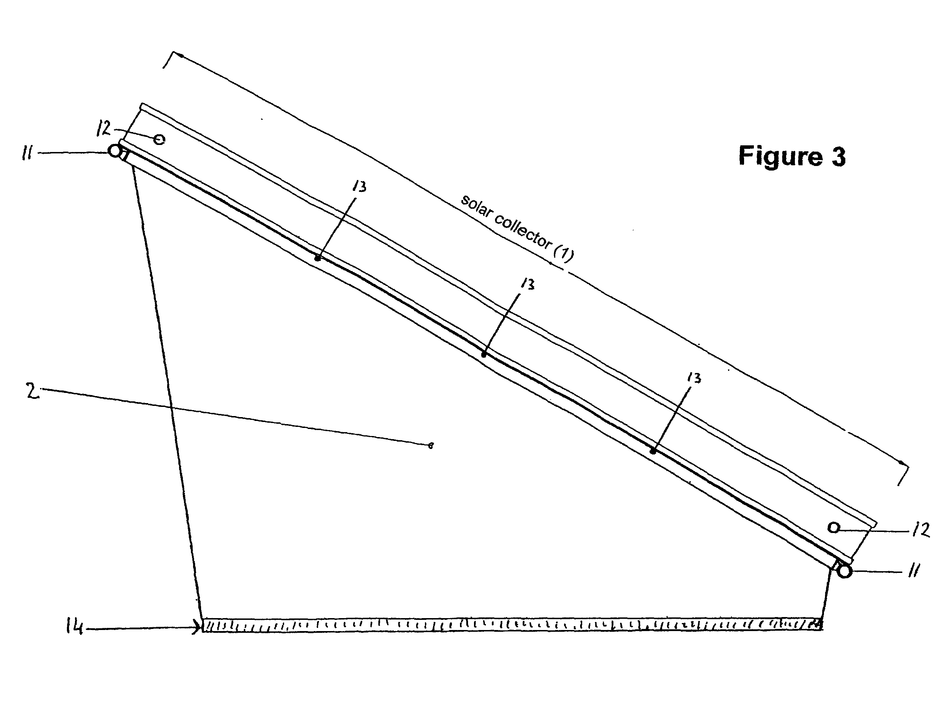

A solar panel assembly according to the invention comprises a solar panel or solar collector 1, which is mounted on a supporting device comprising a bottom wall 5, side walls 2, a front wall 3, and a rear wall 4. In the rear wall 4, an inspection panel 5 is provided giving access to the enclosed inner space of the supporting device, which contains the remaining device with components for obtaining and storing the solar energy. The latter device comprises a solar boiler 6, a pump 7 and an expansion tank 8, which are functionally linked to each other by appropriate conduits. The device further comprises a thermostat 10 for control of the temperature in the inner space which is functionally linked to a heating device in the solar boiler 6. In the bottom wall 15, which is outwardly coated with a protective layer 14, an opening 9 is provided for the passage of the connecting conduits and cables. The supporting device is further equipped with lifting hooks 11. In Figure 3 also the connections 12 to the conduits of the solar collector 1 and the supports 13 for the conduits of the solar collector 1 are shown.

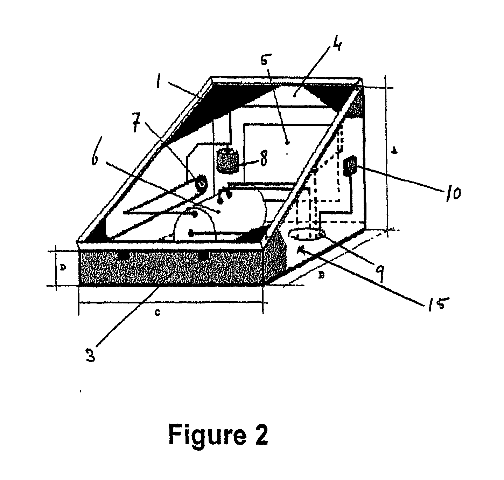

In the embodiment of Figure 2, preferred dimensions are as follows:
- Height:: A = 1120 mm
- Height:: D = 290 mm
- Width:: C = 970 or 1470 mm
- Length:: B = 1580 mm
- Collector:: 1,92 m² or 2,98 m²

- Boiler:: 80 litre or 120 litre

## Claims

1. A solar panel assembly, comprising:
- one or more solar panels,
- a device for supporting such solar panels
- means for obtaining and storing solar energy which are functionally linked to said solar panels **characterised in that**, said means comprises one or more solar boilers (6), a circulating pump (7) and an expansion tank (8), and
- said supporting device comprises:
- a bottom wall (15),
- a rear wall (4) which extends upwardly from a backside of said bottom wall (15),
- optionally a front wall (3) which extends upwardly from a front side of said bottom wall (15),
- two oppositely arranged side walls (2) which are integrally joined with side edges of said bottom wall (15), said rear wall (4) and, when present, said front wall (3), said side walls (12) sloping from said rear wall (4) to said front wall (3) or a front edge of said bottom wall (15),
wherein the supporting device is closed and isolated inwardly; and
wherein the supporting device is provided at the upper side with receiving means for receiving a solar panel; and wherein said means for obtaining and storing solar energy are substantially located within the supporting device.

2. The solar panel assembly as claimed in claim 1, wherein the supporting device is made from metal, such as steel plate or aluminium, resin, such as polyester, or wood.

3. The solar panel assembly as claimed in any one of the preceding claims wherein said one or more solar boilers (6) are provided with a thermostat (10) and a heating device to protect them against low temperature conditions.

4. The solar panel assembly as claimed in any one of the preceding claims wherein the receiving means for receiving a solar panel comprises a frame of composite T-profile.

5. The solar panel assembly as claimed in any one of the preceding claims wherein the side walls (2) decline from the rear wall (4) to the front wall (3) or a front edge of the bottom wall (15) in an angle of about 20-45° relative to the horizontal.

6. The solar panel assembly as claimed in any one of the preceding claims wherein the supporting device is provided with a pane (5) for inspection.

7. The solar panel assembly as claimed in any one of the preceding claims wherein a protective plate (14) is arranged on the bottom side of the supporting device.

8. The solar panel assembly as claimed in any one of the preceding claims wherein the supporting device is equipped with lifting hooks (11) and/or ballast material.

9. The solar panel assembly as claimed in any one of the preceding claims wherein the bottom side of the supporting device is provided with an opening (9) for the passage of connecting cables and/or conduits, the opening (9) being isolated from the adjacent surroundings such so as to provide a water-proof passage of said connecting cables and/or conduits.

## Patentansprüche

1. Solarpaneelanordnung, umfassend:
- ein oder mehrere Solarpaneele,
- eine Vorrichtung zum Stützen solcher Solarpaneele,
- Mittel zum Einfangen und Speichern von Solarenergie, die funktional mit den Solarpaneelen verbunden sind, **dadurch gekennzeichnet, dass** das Mittel einen oder mehrere Solarboiler (6), eine Umwälzpumpe (7) und einen Erweiterungstank (8) umfasst, und
die Stützvorrichtung umfasst:
- eine Bodenwand (15),
- eine Rückwand (4), die sich von einer Rückseite der Bodenwand (15) aufivärts erstreckt,
- optional eine Vorderwand (3), die sich von einer Vorderseite der Bodenwand (15) aufwärts erstreckt,
- zwei gegenüber angeordnete Seitenwände (2), die integral mit Seitenkanten der Bodenwand (15), der Rückwand (4) und, wenn vorhanden, der Vorderwand (3) verbunden sind, wobei die Seitenwände (2) von der Rückwand (4) zur Vorderwand (3) oder einer Vorderkante der Bodenwand (15) abfallen,
wobei die Stützvorrichtung geschlossen und nach innen isoliert ist; und
wobei die Stützvorrichtung an der Oberseite mit Auffiahmemitteln zum Aufnehmen eines Solarpaneels versehen ist; und wobei die Mittel zum Einfangen und Speichern von Solarenergie im wesentlichen innerhalb der Stützvorrichtung angeordnet sind.

2. Solarpaneelanordnung gemäß Anspruch 1, wobei die Stützvorrichtung aus Metall, wie etwa Stahlblech oder Aluminium, Harz, wie etwa Polyester, oder Holz hergestellt ist.

3. Solarpaneelanordnung gemäß einem der vorstehenden Ansprüche, wobei der eine oder die mehreren Solarboiler (6) mit einem Thermostaten (10) und einer Heizvorrichtung versehen sind, um sie gegen Niedertemperaturbedingungen zu schützen.

4. Solarpaneelanordnung gemäß einem der vorstehenden Ansprüche, wobei das Aufhahmemittel zum Aufnehmen eines Solarpaneels einen Rahmen aus Verbund-T-Profil umfasst.

5. Solarpaneelanordnung gemäß einem der vorstehenden Ansprüche, wobei sich die Seitenwände von der Rückwand (4) zur Vorderwand (3) oder einer Vorderkante der Bodenwand (15) in einem Winkel von 20-45° relativ zur Horizontalen senken.

6. Solarpaneelanordnung gemäß einem der vorstehenden Ansprüche, wobei die Stützvorrichtung mit einer Platte (5) zur Inspektion versehen ist.

7. Solarpaneelanordnung gemäß einem der vorstehenden Ansprüche, wobei eine Schutzplatte (14) auf der Unterseite der Stützvorrichtung angeordnet ist.

8. Solarpaneelanordnung gemäß einem der vorstehenden Ansprüche, wobei die Stützvorrichtung mit Hebehaken (11) und/oder Ballastmaterial ausgestattet ist.

9. Solarpaneelanordnung gemäß einem der vorstehenden Ansprüche, wobei die Unterseite der Stützvorrichtung mit einer Öffnung (9) für den Durchlass von Verbindungskabeln und/oder Leitungen versehen ist, wobei die Öffnung (9) gegenüber den angrenzenden Umgebungen so isoliert ist, dass ein wasserdichter Durchlass der Verbindungskabel und/oder Leitungen bereitgestellt ist.

## Revendications

1. Ensemble de panneau solaire, comprenant:
- un ou plusieurs panneaux solaires,
- un dispositif pour supporter ces panneaux solaires,
- des moyens pour obtenir et stocker de l'énergie solaire qui sont fonctionnellement reliés auxdits panneaux solaires,
**caractérisé en ce que** lesdits moyens comprennent une ou plusieurs chaudières solaires (6), une pompe de circulation (7) et un réservoir d'expansion (8), et
ledit dispositif de support comprend :
- une paroi de fond (15),
- une paroi arrière (4) qui s'étend vers le haut depuis une face arrière de ladite paroi de fond (15),
- en option, une paroi avant (3) qui s'étend vers le haut depuis une face avant de ladite paroi de fond (15),
- deux parois latérales placées en vis-à-vis (2) qui sont liées d'un seul tenant avec les bords latéraux de ladite paroi de fond (15), ladite paroi arrière (4) et, le cas échéant, ladite paroi avant (3), lesdites parois latérales (2) étant inclinées de ladite paroi arrière (4) à ladite paroi avant (3) ou un bord avant de ladite paroi de fond (15),
dans lequel le dispositif de support est fermé et isolé à l'intérieur ; et
dans lequel le dispositif de support est muni, sur sa face supérieure, d'un moyen de réception pour recevoir un panneau solaire ; et
dans lequel lesdits moyens pour obtenir et stocker de l'énergie solaire sont substantiellement situés à l'intérieur du dispositif de support.

2. Ensemble de panneau solaire selon la revendication 1, dans lequel le dispositif de support est en métal, comme de la tôle ou de l'aluminium, en résine, comme du polyester, ou en bois.

3. Ensemble de panneau solaire selon l'une quelconque des revendications précédentes, dans lequel lesdites une ou plusieurs chaudières solaires (6) sont munies d'un thermostat (10) et d'un dispositif chauffant pour les protéger contre les basses températures.

4. Ensemble de panneau solaire selon l'une quelconque des revendications précédentes, dans lequel le moyen de réception pour recevoir un panneau solaire comprend un châssis composite en profilé en T.

5. Ensemble de panneau solaire selon l'une quelconque des revendications précédentes, dans lequel les parois latérales (2) descendent de la paroi arrière (4) à la paroi avant (3) ou un bord avant de la paroi de fond (15) en suivant un angle d'environ 20° à 45° par rapport à l'horizontale.

6. Ensemble de panneau solaire selon l'une quelconque des revendications précédentes, dans lequel le dispositif de support est muni d'un panneau (5) permettant l'inspection.

7. Ensemble de panneau solaire selon l'une quelconque des revendications précédentes, dans lequel une plaque protectrice (14) est placée sur la face inférieure du dispositif de support.

8. Ensemble de panneau solaire selon l'une quelconque des revendications précédentes, dans lequel le dispositif de support est équipé de crochets de levage (11) et/ou d'un matériau de lest.

9. Ensemble de panneau solaire selon l'une quelconque des revendications précédentes, dans lequel la face inférieure du dispositif de support est munie d'une ouverture (9) pour le passage de câbles et/ou conduits de connexion, l'ouverture (9) étant isolée de l'environnement adjacent afin de constituer un passage étanche à l'eau pour lesdits câbles et/ou conduits de connexion.
